# EUROPEAN PATENT APPLICATION

(11) **EP 4 586 084 A1**
(43) Date of publication of application: **16.07.2025**
(21) Application number: 23890559.0
(22) Date of filing: 30.10.2023
(51) Int. Cl.: G06F 9/4401

(54) **APPLICATION PROGRAM STARTING METHOD AND INTELLIGENT DEVICE**

(30) Priority: 14.11.2022 CN 202211419676
(71) Applicant: Huawei Technologies Co., Ltd., Shenzhen, Guangdong 518129 (CN)
(72) Inventor: PENG, Xiaolin, Shenzhen, Guangdong 518129 (CN)
(74) Representative: Epping - Hermann - Fischer
(86) International application number: PCT/CN2023/127970
(87) International publication number: WO 2024/104123

(57) **Abstract**

An application starting method and a smart device are provided, and relate to the field of electronic technologies. A first processor of the smart device can dynamically adjust starting priorities of a plurality of applications of the smart device based on a user behavior, so that after being powered on, a second processor can preferentially start an application corresponding to the user behavior, to ensure that the smart device can quickly respond to a user operation. In this solution, when the first processor senses a first user behavior, the first processor may determine a first application corresponding to the first user behavior in the plurality of applications of the smart device, and the first processor may control the second processor to be powered on, and indicate the second processor to preferentially start the first application. When the first processor senses a second user behavior different from the first user behavior, the first processor may determine a second application corresponding to the second user behavior in the plurality of applications, and the first processor may control the second processor to be powered on, and indicate the second processor to preferentially start the second application.

## Description

This application claims priority to Chinese Patent Application No. 202211419676.5, filed with the China National Intellectual Property Administration on November 14, 2022 and entitled "APPLICATION STARTING METHOD AND SMART DEVICE", which is incorporated herein by reference in its entirety.

### TECHNICAL FIELD

This application relates to the field of electronic technologies, and in particular, to an application starting method and a smart device.

### BACKGROUND

With development of economy and advancement of science and technology, living standards of users are constantly improving, and the users pay more attention to personal and property safety. However, a conventional mechanical lock has a simple structure, low safety performance, and a poor anti-theft capability, and is easily unlocked by an illegal person. A used key in a mechanical structure is easily copied, and it is difficult to effectively protect property and personal safety. Therefore, more safe and reliable smart locks are increasingly popular in the market. The smart locks may be a smart door lock, a smart vehicle lock, and the like.

Currently, to meet diversified requirements of users, the smart lock supports an increasing quantity of functions, such as facial recognition, fingerprint recognition, finger vein recognition, video intercom, a smart peephole, and information exchange with another device (for example, a mobile phone or a smart screen). This brings great convenience to lives of the users. However, as the smart lock supports more functions, power consumption of the smart lock is also increasing, and consequently a battery life of the smart lock is greatly shortened. Therefore, to prolong the battery life of the smart lock, these functions supported by the smart lock are usually disabled when there is no person in a scenario, and the smart lock enables these functions only when there is a person in the scenario. However, a long time is consumed for enabling these functions, easily causing a delay in a response of the smart lock, and affecting user experience.

### SUMMARY

This application provides an application starting method and a smart device. A first processor of the smart device can dynamically adjust starting priorities of a plurality of applications of the smart device based on a user behavior, so that after being powered on, a second processor can preferentially start an application corresponding to the user behavior, to ensure that the smart device can quickly respond to a user operation. This improves user experience.

To achieve the foregoing objectives, the following technical solutions are used in embodiments of this application.

According to a first aspect, an application starting method is provided, and may be applied to a smart device. The smart device may include a first processor and a second processor. The method may include: when detecting a first user behavior, the first processor determines a first application corresponding to the first user behavior in a plurality of applications of the smart device. The first processor controls the second processor to be in a power-on state, and indicates the second processor to preferentially start the first application. When detecting a second user behavior, the first processor determines a second application corresponding to the second user behavior in the plurality of applications of the smart device, where the second user behavior is different from the first user behavior, and the first application is different from the second application. The first processor controls the second processor to be in the power-on state, and indicates the second processor to preferentially start the second application.

According to the solution provided in the first aspect, the first processor (for example, a low-power processor, a low-power micro processing unit (MPU), or an MCU) of the smart device may be configured to sense a user behavior in a current scenario, and the second processor (for example, a central processing unit (CPU) or an application processor (AP)) of the smart device may be configured to run the plurality of applications. For example, the smart device is a smart door lock. The smart door lock may support a plurality of applications such as facial recognition, fingerprint recognition, finger vein recognition, video intercom, and a smart peephole. Running of the second processor and the applications consumes power of the smart device. Therefore, the second processor is usually in a power-off state, and the second processor switches to the power-on state and restarts the plurality of applications running on the second processor only when necessary. In this solution, when sensing the user behavior in the current scenario, the first processor may control the second processor to be in the power-on state, and indicate the second processor to start the plurality of applications. In addition, when the first processor senses the user behavior in the current scenario, the first processor may correspondingly adjust a starting sequence of the plurality of applications based on the user behavior in the current scenario, to determine an application with a highest starting priority corresponding to the current user behavior. Therefore, when controlling the second processor to be in the power-on state, the first processor may indicate the second processor to preferentially start the application with the highest starting priority corresponding to the current user behavior.

It may be understood that, different user behaviors may be sensed by the first processor at different times, and the first processor may also determine, based on the different sensed user behaviors, different applications with a highest starting priority, so that the second processor also preferentially starts different applications. However, because an application that is preferentially started each time corresponds to a current user behavior, that is, is usually a related application that a user is to interact with, it can be ensured that the application that is preferentially started each time can quickly respond to the current user operation, to improve user experience. In this way, the first processor in the smart device in this solution can dynamically adjust starting priorities of the plurality of applications of the smart device based on different user behaviors, so that after being powered on, the second processor can preferentially start an application corresponding to a user behavior, to reduce power consumption, and also ensure that the smart device can quickly respond to a user operation. This improves user experience.

In a possible implementation, the determining a first application corresponding to the first user behavior in a plurality of applications of the smart device may include: when the first user behavior is that a user initiates a remote connection request by using a device, the first application is an application for performing a remote viewing operation. In this way, when the user initiates the remote connection request, the first processor can determine that an application that the smart device is to preferentially start this time is a related application having a remote viewing function, and another application may be started later. This ensures that the user can remotely view an image captured by a camera as soon as the remote connection request is initiated.

In a possible implementation, the smart device is provided with a fingerprint recognition area, and the determining a first application corresponding to the first user behavior in a plurality of applications of the smart device may include: when the first user behavior is a touch operation performed by a user on the fingerprint recognition area, the first application is an application for performing a fingerprint recognition operation. In this way, when the user performs a fingerprint input operation, the first processor can determine that an application that the smart device is to preferentially start this time is a related application having a fingerprint recognition function, and another application may be started later. This ensures that the user can unlock the smart device as soon as a fingerprint is input.

In a possible implementation, the determining a first application corresponding to the first user behavior in a plurality of applications of the smart device may include: when the first user behavior is that a user is in a preset range of the smart device, the first application is an application for performing a facial recognition operation. In this way, when the user approaches the smart device within a specific distance, the first processor can determine that an application that the smart device is to preferentially start this time is a related application having a facial recognition function, and another application may be started later. This ensures that facial recognition can be completed as soon as the user approaches the smart device within a specific distance.

In a possible implementation, the smart device is provided with a screen, and the determining a first application corresponding to the first user behavior in a plurality of applications of the smart device may include: when the first user behavior is a viewing operation performed by a user on the screen, the first application is an application for performing a screen display operation. In this way, when the user performs the screen viewing operation, the first processor can determine that an application that the smart device is to preferentially start this time is a related application having a screen display function, and another application may be started later. This ensures that the user can browse displayed content on the screen as soon as the screen viewing operation is performed.

In a possible implementation, the determining a first application corresponding to the first user behavior in a plurality of applications of the smart device may include: when the first user behavior is a visit behavior of a user, the first application is an application for performing a visit reminding operation. In this way, when detecting the visit behavior of the user, the first processor can determine that an application that the smart device is to preferentially start this time is a related application having a visit reminding function, and another application may be started later. This ensures that a host can be reminded of a visit as soon as the user performs the visit behavior.

In a possible implementation, the application starting method may further include: When detecting the first user behavior, the first processor determines a first priority sequence that corresponds to the first user behavior and that is of an application other than the first application in the plurality of applications. Based on this, after the first processor indicates the second processor to preferentially start the first application, the first processor indicates the second processor to sequentially start the application other than the first application in the plurality of applications according to the first priority sequence. Similarly, when detecting the second user behavior, the first processor determines a second priority sequence that corresponds to the second user behavior and that is of an application other than the second application in the plurality of applications. Based on this, after the first processor indicates the second processor to preferentially start the second application, the first processor indicates the second processor to sequentially start the application other than the second application in the plurality of applications according to the second priority sequence. In this way, the first processor can also dynamically adjust a starting priority sequence of a remaining application based on different user behaviors, so that the smart device can sequentially start the plurality of applications according to different starting priority sequences in different use scenarios.

In a possible implementation, a data transmission channel between the first processor and the second processor includes a first channel and a second channel. When the first processor detects the first user behavior, the first processor indicates, through the first channel, the second processor to preferentially start the first application; and the first processor indicates, through the second channel, the second processor to sequentially start the application other than the first application in the plurality of applications according to the first priority sequence. Similarly, when the first processor detects the second user behavior, the first processor indicates, through the first channel, the second processor to preferentially start the second application; and the first processor indicates, through the second channel, the second processor to sequentially start the application other than the second application in the plurality of applications according to the second priority sequence. In this way, the first processor can transmit information about an application with a highest starting priority and information about a priority sequence of a remaining application through different transmission channels. This preferentially ensures that the information about the application with the highest starting priority can be quickly and reliably notified to the second processor through the separate transmission channel.

In a possible implementation, the first channel includes a general-purpose input/output interface GPIO interface, and the second channel includes a serial peripheral interface SPI interface. In this way, by using a simple, fast, and reliable feature of the GPIO interface, the first processor can preferentially ensure that the information about the application with the highest starting priority can be quickly and reliably notified to the second processor, so that the second processor can preferentially and quickly start the application with the highest starting priority, to quickly respond to a user operation. In addition, by using a feature of a strong transmission capability of the SPI interface, the first processor can completely and quickly notify the second processor of the information about the priority sequence of the remaining application, so that the second processor can quickly start the remaining application.

In a possible implementation, after the first processor indicates the second processor to preferentially start the first application, the second processor may also sequentially start an application other than the first application in the plurality of applications according to a preset priority sequence of the plurality of applications. Similarly, after the first processor indicates the second processor to preferentially start the second application, the second processor may also sequentially start an application other than the second application in the plurality of applications according to the preset priority sequence of the plurality of applications. In this way, the first processor may transmit only information about an application with a highest starting priority to the second processor, to ensure that the second processor can preferentially start the application with the highest starting priority. The second processor starts a remaining application according to an original default starting sequence.

In a possible implementation, the application starting method may further include: When simultaneously detecting the first user behavior and the second user behavior, the first processor determines a third priority sequence of the first application and the second application. The first processor controls the second processor to be in the power-on state, and indicates the second processor to sequentially start the first application and the second application according to the third priority sequence. In this way, when a plurality of user behaviors simultaneously occur, the first processor may also sort applications with a highest priority corresponding to the plurality of user behaviors, to sequentially start, based on priorities after the sorting, the applications with the highest priority corresponding to the plurality of user behaviors. This ensures that all related applications that the user is to interact with can be started preferentially.

According to a second aspect, a smart device is provided. The smart device may include a first processor and a second processor. The first processor is configured to: when detecting a first user behavior, determine a first application corresponding to the first user behavior in a plurality of applications of the smart device; and then control the second processor to be in a power-on state, and send the first application to the second processor. The second processor is configured to: receive the first application sent by the first processor, and preferentially start the first application.

The first processor is further configured to: when detecting a second user behavior, determine a second application corresponding to the second user behavior in the plurality of applications of the smart device, where the second user behavior is different from the first user behavior, and the first application is different from the second application; and then control the second processor to be in the power-on state, and send the second application to the second processor. The second processor is configured to: receive the second application sent by the first processor, and preferentially start the second application.

According to the solution provided in the second aspect, when the first processor of the smart device senses a user behavior in a current scenario, the first processor may correspondingly adjust a starting sequence of the plurality of applications based on the user behavior in the current scenario, to determine an application with a highest starting priority corresponding to the current user behavior. Then the first processor may control the second processor to be in the power-on state, and send the determined application with the highest starting priority to the second processor, so that the second processor can preferentially start, based on received priority information, the application with the highest starting priority corresponding to the current user behavior.

It may be understood that, different user behaviors may be sensed by the first processor at different times, and the first processor may also determine, based on the different sensed user behaviors, different applications with a highest starting priority, so that the second processor also preferentially starts different applications. However, because an application that is preferentially started each time corresponds to a current user behavior, that is, is usually a related application that a user is to interact with, it can be ensured that the application that is preferentially started each time can quickly respond to the current user operation, to improve user experience. In this way, the first processor in the smart device in this solution can dynamically adjust starting priorities of the plurality of applications of the smart device based on different user behaviors, so that after being powered on, the second processor can preferentially start an application corresponding to a user behavior, to reduce power consumption, and also ensure that the smart device can quickly respond to a user operation. This improves user experience.

In a possible implementation, the first processor may be configured to: when the first user behavior is that a user initiates a remote connection request by using a device, determine that the first application is an application for performing a remote viewing operation. In this way, when the user initiates the remote connection request, the first processor can determine that an application that the smart device is to preferentially start this time is a related application having a remote viewing function, and another application may be started later. This ensures that the user can remotely view an image captured by a camera as soon as the remote connection request is initiated.

In a possible implementation, the smart device is provided with a fingerprint recognition area, and the first processor may be configured to: when the first user behavior is a touch operation performed by a user on the fingerprint recognition area, determine that the first application is an application for performing a fingerprint recognition operation. In this way, when the user performs a fingerprint input operation, the first processor can determine that an application that the smart device is to preferentially start this time is a related application having a fingerprint recognition function, and another application may be started later. This ensures that the user can unlock the smart device as soon as a fingerprint is input.

In a possible implementation, the first processor may be configured to: when the first user behavior is that the user is in a preset range of the smart device, determine that the first application is an application for performing a facial recognition operation. In this way, when the user approaches the smart device within a specific distance, the first processor can determine that an application that the smart device is to preferentially start this time is a related application having a facial recognition function, and another application may be started later. This ensures that facial recognition can be completed as soon as the user approaches the smart device within a specific distance.

In a possible implementation, the smart device is provided with a screen, and the first processor may be configured to: when the first user behavior is a viewing operation performed by a user on the screen, determine that the first application is an application for performing a screen display operation. In this way, when the user performs the screen viewing operation, the first processor can determine that an application that the smart device is to preferentially start this time is a related application having a screen display function, and another application may be started later. This ensures that the user can browse displayed content on the screen as soon as the screen viewing operation is performed.

In a possible implementation, the first processor may be configured to: when the first user behavior is a visit behavior of a user, determine that the first application is an application for performing a visit reminding operation. In this way, when detecting the visit behavior of the user, the first processor can determine that an application that the smart device is to preferentially start this time is a related application having a visit reminding function, and another application may be started later. This ensures that a host can be reminded of a visit as soon as the user performs the visit behavior.

In a possible implementation, the first processor may be further configured to: when detecting the first user behavior, determine a first priority sequence that corresponds to the first user behavior and that is of an application other than the first application in the plurality of applications, and send the first priority sequence to the second processor. The second processor is further configured to: after preferentially starting the first application, sequentially start the application other than the first application in the plurality of applications according to the first priority sequence.

Similarly, the first processor may be further configured to: when detecting the second user behavior, determine a second priority sequence that corresponds to the second user behavior and that is of an application other than the second application in the plurality of applications, and send the second priority sequence to the second processor. The second processor is further configured to: after preferentially starting the second application, sequentially start the application other than the second application in the plurality of applications according to the second priority sequence. In this way, the first processor can also dynamically adjust a starting priority sequence of a remaining application based on different user behaviors, so that the smart device can sequentially start the plurality of applications according to different starting priority sequences in different use scenarios.

In a possible implementation, a data transmission channel between the first processor and the second processor includes a first channel and a second channel. The first processor may be further configured to: when detecting the first user behavior, send the first application to the second processor through the first channel; and send the first priority sequence to the second processor through the second channel. Similarly, the first processor may be further configured to: when detecting the second user behavior, send the second application to the second processor through the first channel; and send the second priority sequence to the second processor through the second channel. In this way, the first processor can transmit information about an application with a highest starting priority and information about a priority sequence of a remaining application through different transmission channels. This preferentially ensures that the information about the application with the highest starting priority can be quickly and reliably notified to the second processor through the separate transmission channel.

In a possible implementation, the first channel includes a general-purpose input/output interface GPIO interface, and the second channel includes a serial peripheral interface SPI interface. In this way, by using a simple, fast, and reliable feature of the GPIO interface, the first processor can preferentially ensure that the information about the application with the highest starting priority can be quickly and reliably notified to the second processor, so that the second processor can preferentially and quickly start the application with the highest starting priority, to quickly respond to a user operation. In addition, by using a feature of a strong transmission capability of the SPI interface, the first processor can completely and quickly notify the second processor of the information about the priority sequence of the remaining application, so that the second processor can quickly start the remaining application.

In a possible implementation, the second processor may be further configured to: after preferentially starting the first application, sequentially start the application other than the first application in the plurality of applications according to a preset priority sequence of the plurality of applications. Similarly, the second processor may be further configured to: after preferentially starting the second application, sequentially start an application other than the second application in the plurality of applications according to the preset priority sequence of the plurality of applications.

In a possible implementation, the first processor may be further configured to: when simultaneously detecting the first user behavior and the second user behavior, determine a third priority sequence of the first application and the second application; and then control the second processor to be in the power-on state, and send the third priority sequence to the second processor. The second processor may be further configured to: receive the third priority sequence sent by the first processor, and sequentially start the first application and the second application according to the third priority sequence. In this way, the first processor may transmit only information about an application with a highest starting priority to the second processor, to ensure that the second processor can preferentially start the application with the highest starting priority. The second processor starts a remaining application according to an original default starting sequence.

According to a third aspect, a smart device is provided, including one or more memories, a first processor, and a second processor. The one or more memories are coupled to the first processor and the second processor. The one or more memories are configured to store program code, the program code includes instructions, and when the first processor and the second processor execute the instructions, the smart device is enabled to perform the application starting method in any possible implementation of the first aspect.

According to a fourth aspect, a smart door lock is provided, including one or more memories, a first processor, and a second processor. The one or more memories are coupled to the first processor and the second processor. The one or more memories are configured to store program code, the program code includes instructions, and when the first processor and the second processor execute the instructions, the smart door lock is enabled to perform the application starting method in any possible implementation of the first aspect.

According to a fifth aspect, an application starting apparatus is provided. The apparatus is included in a smart device, and the apparatus has a function of implementing a behavior of the smart device in any method in the first aspect and the possible implementations of the first aspect. The function may be implemented by hardware, or may be implemented by hardware executing corresponding software. The hardware or the software includes one or more modules or units corresponding to the function.

According to a sixth aspect, a chip system is provided, and the chip system is applied to a smart device. The chip system includes one or more interface circuits, a first processor, and a second processor. The interface circuit is connected to the first processor and the second processor through lines. The interface circuit is configured to: receive a signal from a memory of the smart device, and send the signal to the processor. The signal includes instructions stored in the memory. When the first processor and the second processor execute the instructions, the smart device performs the application starting method in any possible implementation of the first aspect.

According to a seventh aspect, a storage medium is provided, including instructions. When the instructions are run on a smart device, the smart device is enabled to perform the application starting method in any possible implementation of the first aspect.

According to an eighth aspect, a program product is provided. When the program product runs on a smart device, the smart device is enabled to perform the application starting method in any possible implementation of the first aspect.

It may be understood that, for beneficial effects that can be achieved by the smart device in the third aspect, the smart door lock in the fourth aspect, the application starting apparatus in the fifth aspect, the chip system in the sixth aspect, the storage medium in the seventh aspect, and the program product in the eighth aspect, refer to the beneficial effects in the first aspect and any possible implementation of the first aspect. Details are not described herein again.

### BRIEF DESCRIPTION OF DRAWINGS

FIG. 1 is a diagram 1 of a system architecture of a smart door lock according to an embodiment of this application;
FIG. 2 is a diagram 2 of a system architecture of a smart door lock according to an embodiment of this application;
FIG. 3 is a diagram 3 of a system architecture of a smart door lock according to an embodiment of this application;
FIG. 4 is a diagram 1 of a software architecture of a smart door lock according to an embodiment of this application;
FIG. 5 is a diagram 2 of a software architecture of a smart door lock according to an embodiment of this application;
FIG. 6 is a schematic flowchart 1 of an application starting method according to an embodiment of this application; and
FIG. 7 is a schematic flowchart 2 of an application starting method according to an embodiment of this application.

### DESCRIPTION OF EMBODIMENTS

The following describes the technical solutions in embodiments of this application with reference to the accompanying drawings in embodiments of this application. The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. It should be understood that, in this application, "at least one" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural.

Currently, a smart lock supports increasingly more functions, such as facial recognition, fingerprint recognition, finger vein recognition, video intercom, a smart peephole, and information exchange with another device (for example, a mobile phone or a smart screen). However, because these functions have high requirements on a computing capability and a storage capability of the smart lock, these functions usually need to be deployed on a multimedia system chip with a high computing capability and a high storage capability (for example, a cortex-A series chip or a chip with a similar computing power). However, a multimedia system integrating the plurality of functions is usually complex, and a complex system usually faces problems of high power consumption and slow cold start. Even if the multimedia system chip enters a standby state, a requirement of extremely low standby power consumption of the smart lock cannot be met. Therefore, the multimedia system chip usually needs to be powered off when there is no person in a scenario, and the smart lock enables these functions only when there is a person in the scenario.

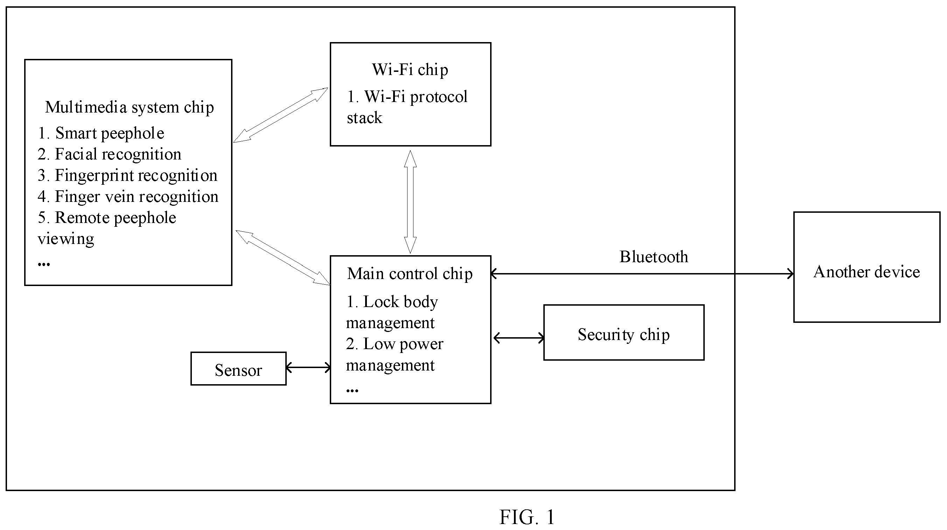

For example, as shown in FIG. 1, a current high-end smart lock usually includes a main control chip, a multimedia system chip, a Wi-Fi chip, and a peripheral sensor. A plurality of functions supported by the smart lock, such as a smart peephole, facial recognition, fingerprint recognition, finger vein recognition, and remote peephole viewing, are all integrated into the multimedia system chip. To reduce power consumption of the smart lock, power supply to the multimedia system chip is usually cut off when there is no person in a scenario. The main control chip is woken up to power on the multimedia system chip again only when the sensor senses that a person is approaching. Therefore, the multimedia system chip initializes and enables the plurality of functions according to a fixed sequence to implement the plurality of functions.

However, it takes a long time to enable these functions. When there is a person in a scenario, these functions of the smart lock are usually required to respond quickly, to respond to an operation of a user in a timely manner. For example, facial recognition needs to respond within 1s, fingerprint recognition needs to respond within 1s, and remote peephole viewing needs to respond within 3s. Therefore, a cold start speed of the multimedia system needs to be improved to ensure user experience.

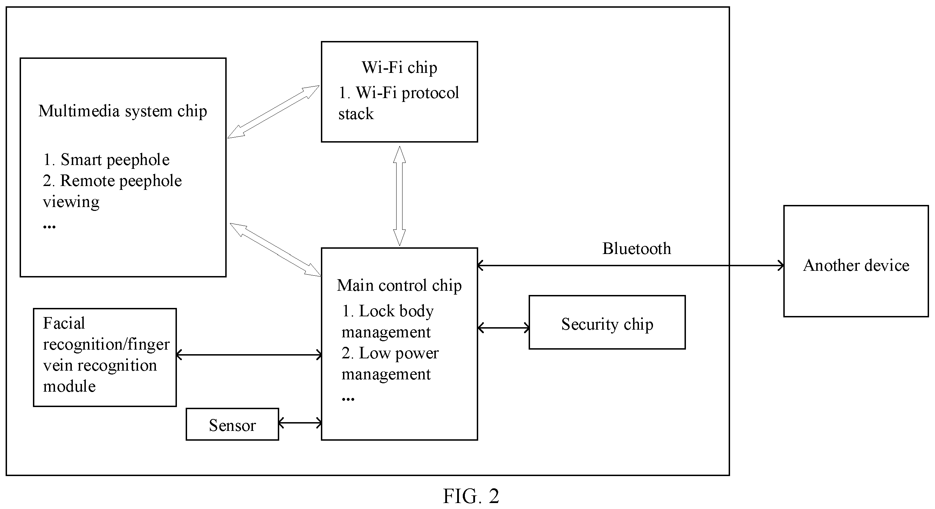

In a solution, the plurality of functions supported by the smart lock may be deployed on a plurality of chips, to disperse the functions of the multimedia system, reduce complexity of the multimedia system and improve the cold start speed of the multimedia system. For example, as shown in FIG. 2, an independent facial recognition or finger vein recognition module may be deployed on the smart lock, and a smart peephole-related function such as the smart peephole and the remote peephole viewing are still deployed on the multimedia system chip, to deploy the smart peephole-related function and an unlocking function such as the facial recognition and the finger vein recognition on different chips. However, this solution not only has low product integration and high costs, but also is difficult to be compatible with all function application scenarios when there are many function application scenarios.

To resolve the foregoing problem, embodiments of this application provide an application starting method. A main control chip of a smart device can dynamically adjust starting priorities of a plurality of applications (that is, applications for implementing the plurality of functions) of the smart device based on a user behavior, so that the multimedia system chip can preferentially start an application corresponding to the user behavior after being powered on, to ensure that the smart device can quickly respond to a user operation. In this way, even if the plurality of functions are all deployed on the multimedia system chip, the multimedia system chip can implement quick responding in different scenarios. This improves user experience.

It may be understood that the application starting method provided in embodiments of this application may be applied to the smart device. The smart device may be a smart lock, a smart vehicle lock, or another smart lock that can support a plurality of application functions, or may be a smart doorbell, a smart peephole, or another smart device that can support a plurality of application functions. A type, a shape, a structure, and a specific component included in the smart device are not limited in embodiments of this application. The smart device may implement, by using components (including hardware and software) included in the smart device, the application starting method provided in embodiments of this application. That is, the smart device may determine, based on sensed user behavior information, an application with a highest starting priority corresponding to the user behavior, so that the smart device can preferentially start the application, to respond to a user operation in a timely manner. In this way, the smart device can dynamically adjust the starting priorities of the plurality of applications based on the user behavior, to ensure that some applications are preferentially started based on the priorities, so that the smart device can quickly respond to a user operation based on the applications that are preferentially started. This improves user experience.

The application starting method provided in embodiments of this application may be applied to a plurality of technical fields related to property security protection, such as intelligent driving, smart home, smart building, unmanned selling, and unmanned supermarket, to quickly start a function application on a vehicle device and a door access device.

An example in which the smart device is a smart door lock is used below to describe the solution provided in embodiments of this application.

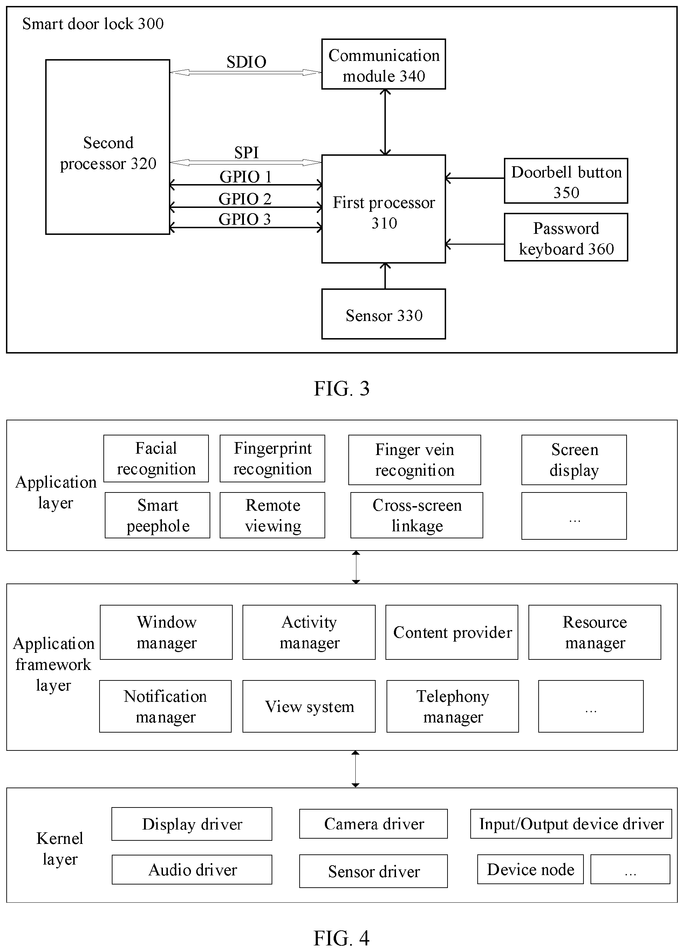

FIG. 3 is a diagram of a structure of a smart door lock 300 according to an embodiment of this application. The smart door lock 300 may include various devices, components, and the like in the smart door lock 300 and/or a lock body of the smart door lock 300. The smart door lock may also include a plurality of applications (application, APP) that implement functions such as facial recognition, fingerprint recognition, finger vein recognition, video intercom, a smart peephole, and information exchange with another device (for example, a mobile phone or a smart screen).

In this embodiment of this application, the smart door lock 300 may include at least two processors. As shown in FIG. 3, the smart door lock 300 may include a first processor 310 and a second processor 320. The first processor and the second processor are merely concepts for distinguishing between two different processors that coexist in the smart door lock 300 in this embodiment of this application.

Optionally, the first processor 310 may be a processor (or a chip) with a weak processing capability, poor performance, and low power consumption. The first processor 310 may include one or more processing units, or the first processor 310 may include one or more cores. For example, the first processor 310 may include a low-power processing module or processing circuit such as a low-power application processor (application processor, AP), a sensor hub (sensor hub), or a micro-programmed control unit (micro-programmed control unit, MCU). The plurality of cores of the first processor 310 run based on an operating system different from that of the second processor 320, or the first processor 310 may even run without an operating system. A memory (or may be considered as an internal memory) may be disposed in the first processor 310, and is configured to store instructions and data. In some embodiments, the memory in the first processor 310 is a cache. The memory may store instructions or data just used or cyclically used by the first processor 310. If the first processor 310 needs to use the instructions or the data again, the first processor 310 may directly invoke the instructions or the data from the memory, to avoid repeated access, reduce a waiting time of the first processor 310, and improve system efficiency. The first processor 310 may run a software code/module of an energy saving method provided in some embodiments of this application, to stop supplying power to some functional modules, and save energy.

The second processor 320 may be considered as a processor (or a chip) with a strong processing capability, good performance, and high power consumption. In this embodiment of this application, the second processor 320 may be configured to run an application with high computing power, for example, the plurality of applications of the functions such as facial recognition, fingerprint recognition, finger vein recognition, video intercom, a smart peephole, and information exchange with another device (for example, a mobile phone or a smart screen). For example, the second processor 320 may include an AP, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The second processor 320 may be a nerve center and a command center of the smart door lock 300, and a plurality of cores of the second processor 320 run based on one operating system. The second processor 320 may generate an operation control signal based on an instruction operation code and a time series signal, to complete control of instruction fetching and instruction execution. In some other embodiments, a memory (or may be considered as an internal memory) may be further disposed in the second processor 320, and is configured to store instructions and data. In some embodiments, the memory in the second processor 320 is a cache. The memory may store instructions or data just used or cyclically used by the second processor 320. If the second processor 320 needs to use the instructions or the data again, the second processor 320 may directly invoke the instructions or the data from the memory, to avoid repeated access, reduce a waiting time of the second processor 320, and improve system efficiency. The second processor 320 may run a software code/module of an energy saving method provided in some embodiments of this application, to stop supplying power to some functional modules, and save energy.

Optionally, when operating systems run on the first processor 310 and the second processor 320 are different, the first processor 310 may run a lightweight system, for example, a real-time (instant) operating system (real-time operating system, RTOS)^{®}, and the second processor 320 may run a rich system, for example, a Linux^{®} operating system or an Android^{®} system.

The smart door lock 300 may further include a sensor 330. The sensor 330 may include various sensors configured to collect environment information, for example, a human body proximity sensor, a pressure sensor, a distance sensor, an optical proximity sensor, a fingerprint sensor, a temperature sensor, a touch sensor, and an ambient light sensor. The human body proximity sensor may be a passive infrared detector (passive infrared, PIR), an ultrasonic sensor, a time of flight (time of flight, TOF) sensor, or the like, and may be configured to detect information about a distance between a person and the smart door lock.

It should be understood that, in actual application, the smart door lock 300 may further include more or fewer sensors, or another sensor with a same or similar function is replaced with the foregoing listed sensor, or the like. This is not limited in this embodiment of this application. The sensor 330 may collect data, and transmit the collected data to the first processor 310 connected to the sensor 330. The first processor 310 may process the data from the sensor 330, perform fusion processing on the data, and control, based on a processing result, for example, a power management module to perform a corresponding operation.

Optionally, the smart door lock 300 can work according to various power management modes (for example, an active mode and a power saving mode), to save power in some cases. For example, when there is no person in a scenario, the smart door lock 300 may switch from the active mode to the power saving mode. When switching to the power saving mode, the smart door lock 300 may disable at least some components (for example, the second processor 320). In some embodiments, when the smart door lock 300 works in the power saving mode, the sensor 330 (for example, the human body proximity sensor) may keep at least partially enabled. In this way, the smart door lock can still detect some user behavior events. Optionally, if the smart door lock 300 is requested to enter the power saving mode, the second processor 320 may be powered off when the smart door lock is in the power saving mode.

The smart door lock 300 may have a communication function, or may have no communication function. For example, the smart door lock 300 may send, through a Bluetooth module, user behavior data (for example, a behavior of a user approaching the door lock or a behavior of inputting a fingerprint) to another device such as a mobile phone connected to the smart door lock 300, so that the another device displays prompt information based on the user behavior data, to remind an indoor user of a user behavior outside the door.

In some embodiments, the smart door lock 300 may include a communication module 340. The communication module 340 may include a wireless communication module and/or a mobile communication module, and one or more antennas. The smart door lock 300 may implement a communication function through the one or more antennas, and the wireless communication module or the mobile communication module. The mobile communication module (or referred to as a baseband module) may provide a wireless communication solution that is applied to the smart door lock 300 and that includes 2G/3G/3G/5G and the like. For example, a modem may also be considered as a mobile communication module. The wireless communication module may provide a solution, applied to the smart door lock 300, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The one or more antennas may be configured to transmit and receive electromagnetic wave signals. The BT may be Bluetooth low energy (Bluetooth low energy, BLE).

For example, in FIG. 3, the communication module 340 is a Wi-Fi communication module. The Wi-Fi communication module may include a 2.4 GHz Wi-Fi functional module and a 5 GHz Wi-Fi functional module. In some embodiments, the Wi-Fi communication module may transmit data to the first processor 310 (or the second processor 320) through a universal asynchronous receiver transmitter (universal asynchronous receiver transmitter, UART), secure digital input/output (secure digital input and output, SDIO), a universal serial bus (universal serial bus, USB) interface, or a serial peripheral interface (serial peripheral interface, SPI), and implement a Wi-Fi function based on instructions of the first processor 310 (or the second processor 320). The UART interface is a universal serial data bus used for asynchronous communication. The bus may be a bidirectional communication bus, and converts to-be-transmitted data between serial communication and parallel communication. The USB interface is an interface that conforms to a USB standard specification, and may be specifically a mini USB interface, a micro USB interface, a USB Type C interface, or the like.

In some embodiments, when the smart door lock 300 receives, through the Wi-Fi communication module, a remote connection request initiated by another device, the Wi-Fi communication module may wake up the first processor 310, and the first processor 310 may control, based on the remote connection request, the second processor to be powered on to implement a remote peephole viewing function.

In some embodiments, the smart door lock 300 may further include peripheral devices such as a doorbell button 350 and a password keyboard 360. The doorbell button 350 may be a mechanical button, or may be a touch button. The password keyboard 360 may be a mechanical button, or may be a touch button.

In some embodiments, the smart door lock 300 may further include a screen. The screen is configured to display an image, a video, and the like. The screen may include a display panel. In some embodiments, the smart door lock 300 may include one or N screens, where N is a positive integer greater than 1. Optionally, the screen may be disposed inside a door as an inner screen. Optionally, the screen may alternatively be disposed on the door lock, to provide a display function of password input or fingerprint input.

In some embodiments, the smart door lock 300 may further include a camera. The camera is configured to capture a static image or a video. An optical image of an object is generated through a lens, and is projected onto a photosensitive element. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the smart door lock 300 may include one or N cameras, where N is a positive integer greater than 1. Optionally, the camera may be disposed outside the door, and is configured to capture a scenario image or a video outside the door. Optionally, the camera may alternatively be disposed outside the door, and is configured to implement video intercom of users inside and outside the door.

In some embodiments, the second processor 320 is connected to the first processor 310. In this way, the first processor 310 and the second processor 320 may send instructions or data to each other, to implement a corresponding function. In this embodiment of this application, the first processor 310 may identify a current behavior and purpose of a user based on the sensing information of the sensor 330 and input information of the peripheral device such as the doorbell button 350, the password keyboard 360, and the screen, to determine an application with a highest starting priority corresponding to the user behavior. Then, the first processor 310 may control the second processor 320 to be powered on, and send the application with the highest starting priority this time to the second processor 320, to indicate the second processor 320 to preferentially start the application with the highest starting priority. In some embodiments, the first processor 310 may also determine, based on the current behavior and purpose of the user, a priority sequence of the plurality of applications in the smart door lock 300 for implementing the functions such as facial recognition, fingerprint recognition, finger vein recognition, video intercom, a smart peephole, and information exchange with another device (for example, a mobile phone or a smart screen). Then, the first processor 310 may send the priority sequence to the second processor 320, so that the second processor 320 sequentially starts the plurality of applications according to the priority sequence.

In this embodiment of this application, in addition to basic data transmission through an interface such as an SPI or a UART, the second processor 320 and the first processor 310 may further transmit information about the application with the highest starting priority through a general-purpose input/output (general-purpose input/output, GPIO) interface. One or more groups of GPIO interfaces may be included between the second processor 320 and the first processor 310. Different combinations of high and low levels of the GPIO interface may indicate different highest starting priority information. The first processor 310 may send, to the second processor 320 by controlling a change of the high and low levels of the GPIO interface, highest starting priority information corresponding to the current user behavior.

A software system of the smart door lock 300 may use a layered architecture, an event-driven architecture, a microkernel architecture, a micro service architecture, or a cloud architecture. In this embodiment of this application, an Android^{®} system with a layered architecture is used as an example to describe the software structure of the smart door lock 300.

FIG. 4 is a block diagram of a software structure of the second processor 320 in the smart door lock 300 according to an embodiment of this application. In this embodiment of this application, after the first processor controls the second processor 320 to be powered on, the second processor 320 may start the operating system of the second processor 320. The operating system of the second processor 320 is an Android^{®} system, and may also be understood as a multimedia system in which the plurality of applications of the functions such as facial recognition, fingerprint recognition, finger vein recognition, video intercom, a smart peephole, remote viewing, and information exchange with another device (for example, a mobile phone or a smart screen) are deployed.

In the layered architecture, the Android^{®} system is divided into several layers, and each layer has a clear role and task. The layers communicate with each other through a software interface. In some embodiments, the Android^{®} system is divided into three layers: an application (APP) program layer (application layer for short), an application framework layer (framework layer for short), and a kernel (kernel) layer (or referred to as a driver layer) from top to bottom.

The application layer may include a series of application packages. As shown in FIG. 4, the application layer may include applications such as facial recognition, fingerprint recognition, finger vein recognition, a smart peephole, remote viewing, screen display, and cross-screen linkage. For example, but not a limitation, the smart door lock may record fingerprint data by using the fingerprint recognition application. During subsequent fingerprint unlocking, collected fingerprint data and the recorded fingerprint data may be compared and matched. When a matching degree between the collected fingerprint data and the recorded fingerprint data is greater than a first matching threshold, fingerprint verification succeeds. The smart door lock can also enable or disable a function of displaying an out-of-door image captured by the camera by using the smart peephole application. The smart door lock may further push, by using the cross-screen linkage application, an out-of-door image captured by the camera to a device with a screen, so that a user can view the out-of-door image by using the device with a screen. The device with a screen may be an electronic device with a display, such as a mobile phone, a tablet computer, a notebook computer, a smart screen, a central control panel of a smart home system, or an augmented reality (augmented reality, AR)/virtual reality (virtual reality, VR) device.

The framework layer provides an application programming interface (application programming interface, API) and a programming framework for applications at the application layer. The application framework layer includes some predefined functions. As shown in FIG. 4, the framework layer may include a window manager, an activity manager, a content provider, a view system, a telephony manager, a resource manager, a notification manager, and the like.

The window manager is used to manage a window program. The window manager may obtain a size of the display, determine whether there is a status bar, perform screen locking, take a screenshot, and the like. The activity manager is responsible for managing an activity, and is responsible for work such as starting, switching, and scheduling of each component in a system, and management and scheduling of applications.

The content provider is configured to: store and obtain data, and enable the data to be accessed by an application. The data may include a video, an image, audio, and the like.

The view system includes visual controls such as a control for displaying a text and a control for displaying an image. The view system may be configured to construct an application. A display interface may include one or more views. The telephony manager is configured to provide the communication function of the smart door lock 300, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction, for example, message notification.

The kernel layer is a layer between hardware and software. The kernel layer may include at least a display driver, an input/output device driver (for example, a driver for a keyboard, a screen, a speaker, or a microphone), a camera driver, an audio driver, a sensor driver, and the like.

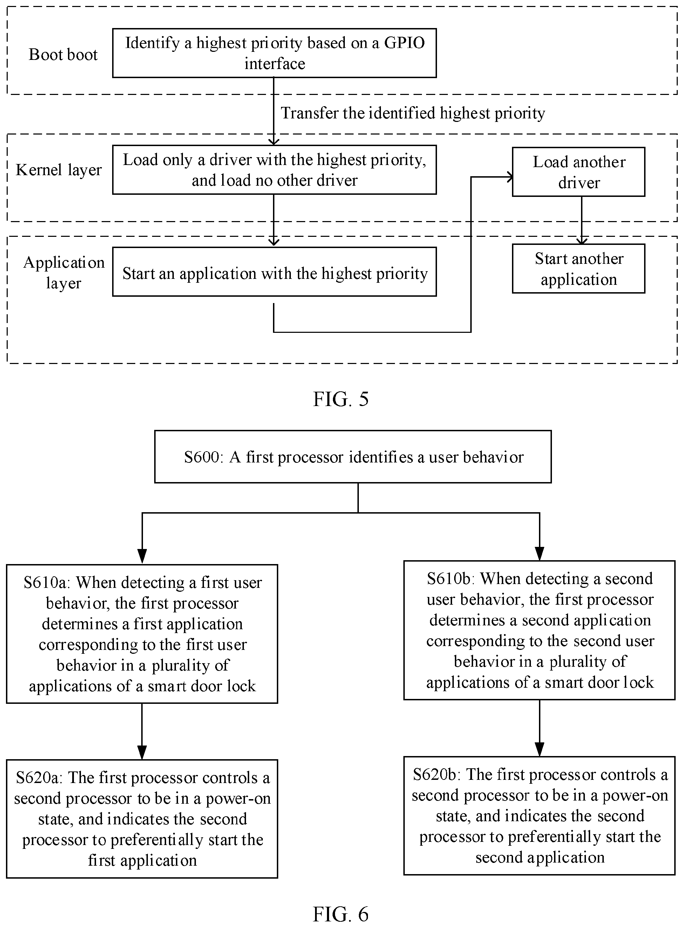

FIG. 5 is a diagram of starting the operating system of the second processor 320. Starting of the operating system of the second processor 320 may include a boot (boot) phase, a kernel (kernel) layer phase, and an application (APP) layer phase. A starting sequence of the operating system of the second processor 320 is first performing the boot (boot) phase, then performing the kernel (kernel) phase, and finally performing the application (APP) phase.

In this embodiment of this application, after the first processor 310 sends the highest starting priority information to the second processor 320 through the GPIO interface, the operating system of the second processor 320 may read a signal of the GPIO interface in the boot (boot) phase, to obtain the current highest starting priority information, and transfer the highest starting priority information to the subsequent kernel (kernel) layer phase and the application (APP) layer phase.

In the kernel layer phase, a driver required by an application with a highest starting priority may be preferentially loaded based on the current highest starting priority information, and another driver may not be loaded temporarily. In the application layer phase, the application with a highest starting priority may be preferentially started based on the current highest starting priority information, and another application may not be started temporarily. Therefore, the smart door lock 300 can quickly respond to a user operation based on the application with the highest priority that is preferentially started.

In the kernel layer phase, after the application with the highest starting priority is started, another unloaded driver may continue to be loaded, and then in the application layer phase, another application that is not started may be started. In this way, the operating system of the second processor 320 is started.

The following describes, with reference to the accompanying drawings, an application starting method provided in embodiments of this application. The method is applied to the foregoing smart door lock. The smart door lock includes a first processor and a second processor. As shown in FIG. 6, the application starting method may include the following steps.

S600: The first processor identifies a user behavior.

In this embodiment of this application, the smart door lock may support a plurality of function applications such as a smart peephole, facial recognition, fingerprint recognition, finger vein recognition, remote peephole viewing, video intercom, and information exchange with another device (for example, a mobile phone or a smart screen). The plurality of function applications may be run on the second processor of the smart door lock, and the first processor of the smart door lock may control power-on or power-off of the second processor, to control starting or closing of the plurality of function applications on the second processor.

In this embodiment of this application, the smart door lock may work in various power management modes, to save power in some cases. The power management modes may include an active mode and a power saving mode. The power saving mode may also be referred to as a low power mode, a standby mode, or the like. Optionally, when the smart door lock is in the power saving mode, the second processor of the smart door lock is in a power-off state, and an operating system running on the second processor is in a power-off state. In this case, the plurality of function applications running on the second processor are also in a closed state. The operating system running on the second processor may also be understood as a multimedia system in which the plurality of function applications such as facial recognition, fingerprint recognition, finger vein recognition, video intercom, a smart peephole, remote peephole viewing, and information exchange with another device (for example, a mobile phone or a smart screen) are deployed.

Optionally, when the smart door lock is in the power saving mode, the first processor of the smart door lock may also be in a power-off state, and the smart door lock may retain only power supply to a sensor, a communication module, a peripheral device, and the like that are connected to the first processor. The sensor may include a passive infrared detector (passive infrared, PIR), an ultrasonic sensor, a time of flight (time of flight, TOF) sensor, or the like that is configured to detect information about a distance between a person and the smart door lock. The communication module may include a Wi-Fi communication module, a Bluetooth communication module, and the like. The peripheral device may include a doorbell button, a password keyboard, and the like. Types of the sensor, the communication module, the peripheral device, or the like connected to the first processor are not limited in this application.

Optionally, when the smart door lock is in the power saving mode, the first processor of the smart door lock may still be in a power-on state, but some cores run on the first processor stop working. For example, a scanning frequency of the Wi-Fi communication module may be reduced to reduce wake-up; or some modules such as the Bluetooth communication module and the Wi-Fi communication module are in a low power mode.

Optionally, when the sensor senses that a person approaches the smart door lock in a scenario, the sensor may wake up the first processor, so that the first processor is in a normal working state. Optionally, when the communication module receives a communication connection request, the communication module may also wake up the first processor, so that the first processor is in the normal working state. Optionally, when the peripheral device such as the doorbell button or the password keyboard detects an input operation of a user, the peripheral device may also wake up the first processor, so that the first processor is in the normal working state. Waking up of the first processor may be that some cores on the first processor that stop working start to work again, or may be that the smart door lock powers on the first processor, so that the first processor switches from the power-off state to the power-on state.

Optionally, after the first processor is woken up, the first processor may identify a current user behavior or a user intention based on information sensed by the sensor, the communication connection request received by the communication module, or the input operation of the user detected by the peripheral device.

Optionally, the first processor may identify, based on information about a distance between a human body and the smart door lock that is sensed by the PIR, the ultrasonic sensor, and the TOF sensor, whether the user behavior is that the user is in a preset range of the smart device. When the first processor detects that the current user behavior is that the user is in the preset range of the smart door lock, it may be considered that there is a high probability that the user needs to go to a location of the smart door lock, and the user may have an intention of interacting with the smart door lock. In this case, the first processor needs to start the operating system running on the second processor, to respond, based on the plurality of function applications running in the operating system, to an interaction operation that is to be performed by the user. The preset range may be properly set based on an actual application scenario, and is not limited herein. For example, the preset range may be an area range with a radius of 1.2 meters centered on the smart door lock.

Optionally, when the first processor detects that the user is not in the preset range of the smart door lock, it may be considered that there is a high probability that the user passes through the location of the smart door lock. In this case, the first processor may not start the second processor, to save power.

Optionally, when the Wi-Fi communication module receives the communication connection request, the first processor may identify that the user behavior is a remote connection request. Generally, a corresponding application such as a smart home application may be installed on an electronic device, to bind the electronic device to the smart door lock. Therefore, when the user has a remote peephole viewing requirement, the user may initiate a remote connection request by using an application on the electronic device. The remote connection request may be sent, through a server, to a router connected to the Wi-Fi communication module of the smart door lock that is bound to the electronic device, and then the Wi-Fi communication module of the smart door lock can receive the remote connection request initiated by the user.

It may be understood that, when the first processor detects that the current user behavior is the remote connection request initiated by the user, the first processor starts the operating system running on the second processor, to respond, based on the plurality of function applications running in the operating system, to an interaction operation that is to be performed by the user.

Optionally, when the smart door lock supports a fingerprint recognition function, the smart door lock may include a fingerprint recognition area for collecting fingerprint information of the user. The first processor may also identify, based on sensing information of the fingerprint recognition area, whether the user behavior is a touch operation performed on the fingerprint recognition area. It may be understood that when the current user behavior detected by the first processor is the touch operation performed on the fingerprint recognition area, the first processor starts the operating system running on the second processor, to respond to a fingerprint input operation of the user based on the fingerprint recognition application running in the operating system.

Optionally, when the smart door lock supports functions such as video intercom and inner screen display, the smart door lock may include a screen disposed inside the door. The first processor may also identify, based on a touch operation detected on the screen, whether the user behavior is a viewing operation performed by the user on the screen. When the first processor detects that the current user behavior is the viewing operation performed by the user on the screen, the first processor starts the operating system running on the second processor, to respond to the user behavior based on an inner screen viewing application running in the operating system, to implement an intention of viewing an environment outside the door.

Optionally, the smart door lock may include a screen disposed on a door lock. The first processor may also identify, based on a touch operation detected on the screen, whether the user behavior is a password input operation or a fingerprint input operation performed on the screen. It may be understood that when the current user behavior detected by the first processor is the password input operation or the fingerprint input operation performed on the screen, the first processor needs to start the operating system running on the second processor, to respond to the password input operation or the fingerprint input operation of the user based on a fingerprint recognition application or a password matching application running in the operating system.

Optionally, the first processor may also identify the current user behavior based on an input operation of the user detected by the peripheral device such as the doorbell button or the password keyboard. For example, the first processor may identify, based on a press operation of the user that is detected by the doorbell button, that the user behavior is a visit behavior. It may be understood that, when the current user behavior detected by the first processor is the visit behavior, the first processor starts the operating system running on the second processor, to prompt, based on various visit reminding applications running in the operating system, a homeowner that a person is visiting outside the door.

For example, the first processor may also identify, based on a press operation of the user detected by the password keyboard, that the user behavior is a password input operation performed on the password keyboard. It may be understood that, when the current user behavior detected by the first processor is the password input operation performed on the password keyboard, the first processor may consider that the user has an intention of unlocking. In this case, the first processor needs to start the operating system running on the second processor, to respond to the password input operation of the user based on the password matching application running in the operating system.

It may be understood that the foregoing scenarios are example scenarios, and are not limited in this embodiment of this application. Optionally, the plurality of scenarios may occur simultaneously, or one of the scenarios may occur. A type of the occurrence scenario is not limited in this embodiment of this application.

S610a: When detecting a first user behavior, the first processor determines a first application corresponding to the first user behavior in the plurality of applications of the smart door lock.

Currently, to save power, the second processor is usually in a power-off state. Therefore, the current second processor cannot identify a current use scenario of the user. Therefore, currently, each time the second processor is powered on, the second processor usually starts, according to a fixed starting sequence, the plurality of applications running in the operating system on the second processor. However, it takes a long time for an application that is started in a lower order to run normally. As a result, once a current operation of the user needs to be responded by an application that is started in a lower order, the user needs to wait for a long time, and user experience is poor.

In this embodiment of this application, the first processor may determine, based on the identified current user behavior, an application with a highest starting priority corresponding to the user behavior, so that after controlling the second processor to be powered on, the first processor may indicate the second processor to preferentially start the application with the highest starting priority. The highest starting priority may be understood as an application that the smart door lock is to preferentially start this time. It may be understood that the application with the highest starting priority is usually a related application that the user is to interact with.

In this way, the smart door lock can dynamically adjust starting priorities of the plurality of applications of the smart door lock based on different sensed user behaviors, to ensure that an application that is preferentially started by the smart door lock each time can quickly respond to a user operation. It may be understood that an application with a highest starting priority determined by the first processor each time corresponds to a current user behavior, to ensure that an application that needs to quickly respond to a current user operation can be preferentially started. This reduces a response waiting time of the user and improves user experience.

Optionally, when detecting the first user behavior, the first processor may determine the first application corresponding to the first user behavior in the plurality of applications of the smart door lock. The first application is an application with a highest starting priority in the plurality of applications of the smart door lock under the first user behavior.

Optionally, the first processor may prestore a correspondence between a user behavior and an application with a highest starting priority, so that in an actual scenario, when detecting the first user behavior, the first processor can find, based on the prestored correspondence, the application with the highest starting priority corresponding to the first user behavior, and use the application as the first application corresponding to the first user behavior.

For example, when the first user behavior is that the user initiates a remote connection request by using a device, the first application may be an application for performing a remote viewing operation. In this way, when the user initiates the remote connection request, the first processor can determine that an application that the smart door lock is to preferentially start this time is a related application having a remote viewing function, and another application such as the fingerprint recognition application or the password matching application may be started later. This ensures that the user can remotely view an environment outside the door as soon as the remote connection request is initiated.

For example, the smart door lock includes the fingerprint recognition area. When the first user behavior is a touch operation performed by the user on the fingerprint recognition area, the first application may be an application for performing a fingerprint recognition operation. In this way, when the user performs a fingerprint input operation, the first processor can determine that an application that the smart door lock is to preferentially start this time is a related application having a fingerprint recognition function, and another application such as the password matching application or the remote viewing application may be started later. This ensures that the user can unlock the smart door lock as soon as a fingerprint is input.

For example, when the first user behavior is that the user is in a preset range of the smart door lock, the first application may be an application for performing a facial recognition operation. In this way, when the user approaches the smart door lock within a specific distance, the first processor can determine that an application that the smart door lock is to preferentially start this time is a related application having a facial recognition function, and another application such as the password matching application or the remote viewing application may be started later. This ensures that facial recognition can be completed as soon as the user approaches the smart door lock within a specific distance. Optionally, when the smart door lock can support facial recognition unlocking, in this embodiment of this application, the smart door lock can also be unlocked as soon as the user approaches the smart door lock within a specific distance.

For example, the smart door lock includes a screen. When the first user behavior is a viewing operation performed by the user on the screen, the first application may also be an application for performing a screen display operation. In this way, when the user performs a screen viewing operation, the first processor can determine that an application that the smart door lock is to preferentially start this time is a related application having a screen display function, and another application such as the password matching application or the fingerprint recognition application may be started later. This ensures that the user can browse displayed content on the screen as soon as the screen viewing operation is performed. Optionally, when the screen of the smart door lock is disposed inside a door, the smart door lock may support a function of viewing an environment outside the door on the inner screen. In this embodiment of this application, the user can also view an image or a video of an environment outside the door as soon as a screen viewing operation is performed.

For example, when the first user behavior is a visit behavior of the user, the first application may also be an application for performing a visit reminding operation. The visit behavior may be that the doorbell button of the smart door lock is pressed by the user, or may be that the user is in a preset range of the smart door lock. The visit behavior is not limited in this embodiment of this application. For example, the visit behavior may also be a specified voice made by the user, for example, "Is anyone there?". In this way, when detecting the visit behavior of the user, the first processor can determine that an application that the smart door lock is to preferentially start this time is a related application having a visit reminding function, and another application such as the password matching application or the fingerprint recognition application may be started later. This ensures that a homeowner can be reminded of a visit as soon as the user performs the visit behavior.

Optionally, the related application having the visit reminding function may be a cross-screen linkage application. The smart door lock may push, by using the cross-screen linkage application, an out-of-door image captured by a camera to a device with a screen, so that a user can view the out-of-door image by using the device with a screen. For example, the device with a screen is a smart screen. After receiving the out-of-door image, the smart screen may display the out-of-door image in a form of a pop-up window, so that when watching a displayed image of the smart screen, the user may quickly learn, by using content of the pop-up window displayed by the smart screen, that a person outside the door is visiting. Optionally, the smart door lock may also push, by using the cross-screen linkage application, an out-of-door image captured by the camera to a plurality of devices with a screen, for example, may push the out-of-door image to a smart screen and a mobile phone at the same time.

It may be understood that the first user behavior and the first application corresponding to the first user behavior are examples of implementations, and are not limited in this embodiment of this application.

S620a: The first processor controls the second processor to be in a power-on state, and indicates the second processor to preferentially start the first application.

After the first processor determines the first application corresponding to the current first user behavior in the plurality of applications of the smart door lock, the first processor may control the second processor to be in the power-on state, to start the operating system on the second processor. In addition, when the second processor starts the operating system, the first processor may indicate the second processor to preferentially start the first application in the operating system.

Optionally, the smart door lock may include a power management module, configured to control power-off and power-on of components such as the first processor, the second processor, the sensor, and the communication module in the smart door lock. After the first processor determines the first application with the highest starting priority corresponding to the current user behavior, the first processor may control the power management module to restore power supply to the second processor, so that the second processor switches from the power-off state to the power-on state.

Optionally, a data transmission channel between the first processor and the second processor may include a first channel, and the first notification is mainly for transmitting starting priority information determined by the first processor. In some embodiments, the first channel may include a general-purpose input/output interface GPIO interface. Optionally, the first channel may include one group of GPIO interfaces, or may include a plurality of groups of GPIO interfaces. The first processor may output, by using a change of high and low levels of the GPIO interface, information about the application with the highest starting priority corresponding to the current user behavior. In this way, when the first processor detects the first user behavior, the first processor may indicate, by using the change of the high and low levels of the GPIO interface of the first channel, the second processor to preferentially start the first application.

For example, the first channel includes three groups of GPIO interfaces: GPIO 1, GPIO 2, and GPIO 3. When the first processor controls a GPIO interface level combination of the first channel to be 001 (that is, the GPIO 1 and the GPIO 2 are at a low level, and the GPIO 3 is at a high level), the level combination 001 may indicate that the application with the highest starting priority corresponding to the current user behavior is the application having the fingerprint recognition function. When the first processor controls the GPIO interface level combination of the first channel to be 010 (that is, the GPIO 1 and the GPIO 3 are at a low level, and the GPIO 2 is at a high level), the level combination 010 may indicate that the application with the highest starting priority corresponding to the current user behavior is the application having the facial recognition function.

It may be understood that, because the second processor needs to quickly start an application that the user currently requires most, and the GPIO interface can implement simple and fast data transmission, the first processor can quickly and reliably notify the second processor of the information about the application with the highest priority through the GPIO interface.

Optionally, the data transmission channel between the first processor and the second processor may also include a second channel, and the second channel may implement basic data transmission between the first processor and the second processor. The second channel is usually an interface such as an SPI or a UART. When detecting the first user behavior, the first processor may also indicate, through the second channel, the second processor to preferentially start the first application.

In some embodiments, the first processor may also perform priority sorting on a remaining application based on different user behaviors. Therefore, after preferentially starting the application with the highest starting priority, the first processor may indicate the second processor to sequentially start the remaining application based on the priority sorting. In this way, the smart door lock can dynamically adjust a starting priority sequence of the plurality of applications of the smart door lock based on different sensed user behaviors, so that the smart door lock can sequentially start the plurality of applications according to different starting priority sequences in different use scenarios.

Optionally, the first processor may determine a first priority sequence that corresponds to the first user behavior and that is of an application other than the first application in the plurality of applications. Then, the first processor may indicate the second processor to sequentially start the application other than the first application in the plurality of applications according to the first priority sequence.

For example, when the smart door lock includes the remote viewing application, the fingerprint recognition application, the facial recognition application, and an inner screen display application, when the first user behavior is that the user initiates the remote connection request by using the device, and the first application is an application for performing a remote viewing operation, a starting priority sequence of applications other than the first application in the plurality of applications of the smart door lock may be: the facial recognition application > the inner screen display application > the fingerprint recognition application.

For example, when the smart door lock includes the remote viewing application, the fingerprint recognition application, the facial recognition application, and the inner screen display application, when the first user behavior is that the user is in a preset range of the smart door lock, and the first application is an application for performing a facial recognition operation, a starting priority sequence of applications other than the first application in the plurality of applications of the smart door lock may be: the fingerprint recognition application > the inner screen display application > the remote viewing application.

It may be understood that the first user behavior and the priority sorting of the another application corresponding to the first user behavior are example implementations, and are not limited in this embodiment of this application.

In some embodiments, the first processor may send the first priority sequence through the first channel, to indicate the second processor to sequentially start the application other than the first application in the plurality of applications according to the first priority sequence. In some other embodiments, because a transmission capability of the second channel is stronger than a transmission capability of the first channel, the first processor may also send the first priority sequence through the second channel, to indicate the second processor to sequentially start the application other than the first application in the plurality of applications according to the first priority sequence. Optionally, the first processor may alternatively transmit the information about the application with the highest starting priority through the first channel, and transmit the information about the first priority sequence of the application other than the first application through the second channel. Therefore, the first processor can output different priority information through different transmission channels.

In some embodiments, after the first processor may indicate the second processor to preferentially start the application with the highest starting priority, the second processor may also sequentially start the remaining application according to a default sequence. Optionally, the second processor may sequentially start the application other than the first application in the plurality of applications according to a preset priority sequence of the plurality of applications. The preset priority sequence may be a sequence properly set based on an actual application scenario, or may be set by the user. This is not limited in this embodiment of this application.

S610b: When detecting a second user behavior, the first processor determines a second application corresponding to the second user behavior in the plurality of applications of the smart door lock.

The second user behavior is different from the first user behavior, and the first application is different from the second application. In this way, the smart door lock can dynamically adjust starting priorities of the plurality of applications of the smart door lock based on different sensed user behaviors, to ensure that an application that is preferentially started by the smart door lock each time can quickly respond to a user operation.

Optionally, when detecting the second user behavior, the first processor may determine the second application corresponding to the second user behavior in the plurality of applications of the smart door lock. The second application is an application with a highest starting priority in the plurality of applications of the smart door lock under the second user behavior.

Optionally, the first processor may prestore a correspondence between a user behavior and an application with a highest starting priority, so that in an actual scenario, when detecting the second user behavior, the first processor can find, based on the prestored correspondence, the application with the highest starting priority corresponding to the second user behavior, and use the application as the second application corresponding to the second user behavior.

For example, when the second user behavior is that the user initiates a remote connection request by using a device, the second application may be an application for performing a remote viewing operation.

For example, when the second user behavior is that the user is in a preset range of the smart door lock, the second application may be an application for performing a facial recognition operation.

For example, the smart door lock includes a screen. When the second user behavior is a viewing operation performed by the user on the screen, the second application may also be an application for performing a screen display operation.

For example, when the second user behavior is a visit behavior of the user, the second application may also be an application for performing a visit reminding operation.

It may be understood that the first user behavior and the second user behavior are different user behaviors. When the first user behavior is any one of the following behaviors: the user initiates a remote connection request by using a device, the user is in a preset range of the smart door lock, the user performs a viewing operation on the screen, and a visit behavior of the user, the second user behavior may be any behavior other than the first user behavior in the behaviors: the user initiates a remote connection request by using a device, the user is in a preset range of the smart door lock, the user performs a viewing operation on the screen, and the visit behavior of the user.

S620b: The first processor controls the second processor to be in the power-on state, and indicates the second processor to preferentially start the second application.

Similarly, after the first processor determines the second application corresponding to the current second user behavior in the plurality of applications of the smart door lock, the first processor may control the second processor to be in the power-on state, to start the operating system on the second processor. In addition, when the second processor starts the operating system, the first processor may indicate the second processor to preferentially start the second application in the operating system.

Optionally, when the first processor detects the second user behavior, the first processor may indicate, by using the change of the high and low levels of the GPIO interface of the first channel, the second processor to preferentially start the second application. Optionally, when the first processor detects the second user behavior, the first processor may also indicate, through the second channel, the second processor to preferentially start the second application.

Optionally, the first processor may also perform priority sorting on a remaining application based on different user behaviors. Therefore, after preferentially starting the application with the highest starting priority, the first processor may indicate the second processor to sequentially start the remaining application based on the priority sorting. In this way, the smart door lock can dynamically adjust a starting priority sequence of the plurality of applications of the smart door lock based on different sensed user behaviors, so that the smart door lock can sequentially start the plurality of applications according to different starting priority sequences in different use scenarios.

Optionally, the first processor may determine a second priority sequence that corresponds to the second user behavior and that is of an application other than the second application in the plurality of applications. Then, the first processor may indicate the second processor to sequentially start the application other than the second application in the plurality of applications according to the second priority sequence.

In some embodiments, the first processor may send the second priority sequence through the first channel, to indicate the second processor to sequentially start the application other than the second application in the plurality of applications according to the second priority sequence. In some other embodiments, because the transmission capability of the second channel is stronger than the transmission capability of the first channel, the first processor may also send the second priority sequence through the second channel, to indicate the second processor to sequentially start the application other than the second application in the plurality of applications according to the second priority sequence. Optionally, the first processor may alternatively transmit the information about the application with the highest starting priority through the first channel, and transmit the information about the second priority sequence of the application other than the second application through the second channel. Therefore, the first processor can output different priority information through different transmission channels.

In some embodiments, after the first processor may indicate the second processor to preferentially start the application with the highest starting priority, the second processor may also sequentially start the remaining application according to a default sequence. Optionally, the second processor may sequentially start the application other than the second application in the plurality of applications according to a preset priority sequence of the plurality of applications.

In some embodiments, when a plurality of user behaviors simultaneously occur, the first processor may also sort applications with a highest priority corresponding to the plurality of user behaviors, to sequentially start, based on priorities after the sorting, the applications with the highest priority corresponding to the plurality of user behaviors.

Optionally, when simultaneously detecting the first user behavior and the second user behavior, the first processor may also determine a third priority sequence of the first application and the second application, and then the first processor controls the second processor to be in the power-on state, and indicates the second processor to sequentially start the first application and the second application according to the third priority sequence.

For example, when the first user behavior is a touch operation performed by the user on the fingerprint recognition area, and the second user behavior is that the user is in a preset range of the smart door lock, because the user usually approaches the smart door lock when the user performs the fingerprint input operation, the first processor may detect that the first user behavior and the second user behavior occur simultaneously. In this case, the first processor may perform priority sorting on the first application corresponding to the first user behavior, that is, the fingerprint recognition application, and the second application corresponding to the second user behavior, that is, the facial recognition application, to obtain the third priority sequence: the fingerprint recognition application > the facial recognition application. In this case, the first processor controls the second processor to be in the power-on state, and indicates the second processor to preferentially start the fingerprint recognition application, and then start the facial recognition application.

This embodiment of this application provides the application starting method. The smart door lock can determine, based on sensed user behavior information, an application with a highest starting priority corresponding to the user behavior, so that the smart door lock can preferentially start the application, to respond to a user operation in a timely manner. In this way, the smart door lock can dynamically adjust the starting priorities of the plurality of applications based on the user behavior, to ensure that some applications are preferentially started based on the priorities, so that the smart door lock can quickly respond to a user operation based on the applications that are preferentially started. This improves user experience.

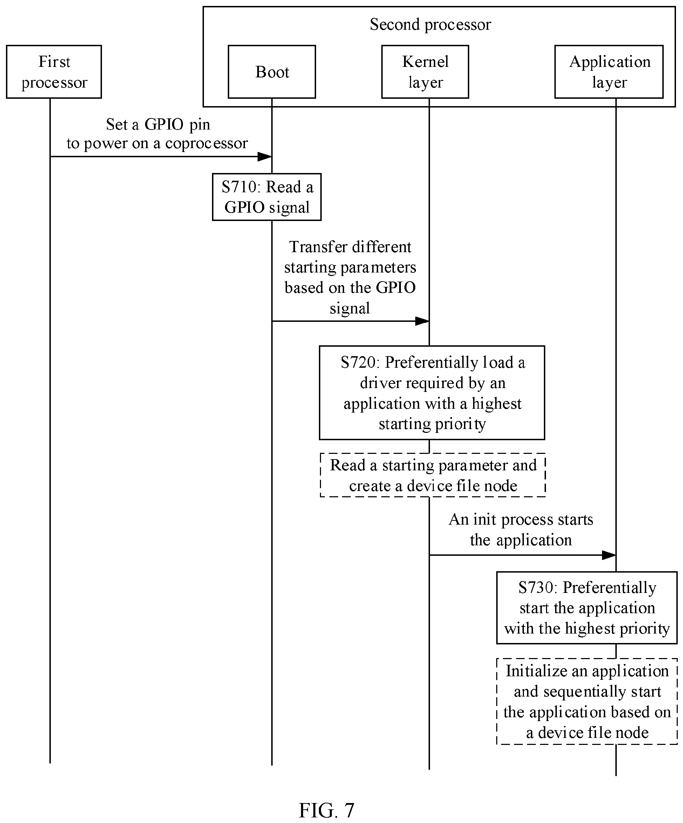

FIG. 7 shows an application starting method according to an embodiment of this application. The method shows a specific process in which an operating system on a second processor of a smart door lock implements quick starting based on a starting priority transmitted by a first processor. As shown in FIG. 7, the application starting method may include the following steps.

S710: The second processor reads a GPIO signal in a boot phase, to obtain priority information for this starting.

In an example in which the first processor currently identifies a first user behavior, it may be understood that when the first processor detects the first user behavior, the first processor may determine a first application corresponding to the first user behavior in a plurality of applications of the smart door lock. Then, the first processor may transmit information about the first application to the second processor.

Optionally, when a transmission channel between the first processor and the second processor includes a GPIO interface, the first processor may configure pin high and levels of the GPIO interface, and a combination of the configured pin high and low levels of the GPIO interface may indicate the information about the first application corresponding to the current first user behavior. Then, the first processor may control the second processor to be in a power-on state.

Optionally, a pin configured to control the second processor to be in the power-on state is disposed on the first processor. The first processor may control the pin to be at a high level, to control the second processor to be in the power-on state, or the first processor may control the pin to be at a low level, to control the second processor to be in a power-off state.

After the second processor is powered on, the operating system on the second processor starts to be started. A starting sequence of the operating system on the second processor is first performing the boot phase, then performing a kernel phase, and finally performing an application phase. Optionally, the second processor may read a level signal of a GPIO pin in the boot phase, to obtain the priority information for this starting. The priority information includes the information about the first application with the highest starting priority this time. In this way, the operating system on the second processor can sense starting priority information of the application corresponding to the current user behavior in the boot phase.

S720: The second processor preferentially loads, in the kernel phase based on the priority information for this starting, a driver required by the application with the highest starting priority.

Optionally, the second processor obtains the priority information for this starting in the boot phase, and may transfer different starting parameters to the subsequent kernel phase based on the priority information for this starting. The second processor may read the starting parameter in the kernel phase, and preferentially start, based on information about the application with the highest starting priority indicated by the starting parameter, the driver required by the application with the highest starting priority.

S730: The second processor preferentially starts the application with the highest starting priority based on the priority information for this starting in the application phase.

Optionally, the second processor may also create a device file node based on the starting parameter in the kernel phase, so that the second processor can obtain the priority information for this starting based on the device file node in the application phase. After obtaining the priority information for this starting in the application phase, the second processor may preferentially start the application with the highest starting priority based on the indicated information about the application with the highest starting priority. Optionally, the second processor may execute an initialization procedure of the application with the highest starting priority, to read application information of an application degree, and complete a starting point of the application with the highest starting priority. Optionally, the second processor may start the application by using an init process. The init process is a first user-level process started by the operating system in the kernel phase.

Optionally, after completing starting of the application with the highest starting priority in the application phase, the second processor may return to the kernel phase to load a driver of another application that is not loaded. Then, the second processor completes starting of the another application in the application phase. In this way, the application with the highest starting priority on the smart door lock is preferentially started and responded to, to ensure that the smart door lock can quickly respond to a user operation. This improves user experience.

This embodiment of this application provides the application starting method. The first processor of the smart door lock may sense a current user behavior with reference to user information detected by a sensor, a communication module, a peripheral device, and the like, and dynamically adjust current starting priorities of the plurality of applications of the smart door lock based on the sensed user behavior. Then, the first processor may quickly notify the second processor of the starting priorities through the GPIO interface, so that the second processor can sense the starting priorities corresponding to the current user behavior in the boot phase, and the second processor can preferentially start the function application with the highest starting priority in the kernel phase and the application phase, to ensure that the smart door lock can quickly respond to a user operation based on the function application that is preferentially started. This improves user experience.

It may be understood that, to implement the foregoing functions, the smart door lock includes corresponding hardware and/or software modules for performing the functions. With reference to algorithm steps of examples described in embodiments disclosed in this specification, this application can be implemented in a form of hardware or a combination of hardware and software. Whether a function is performed by the hardware or hardware driven by software depends on particular applications and design constraints of the technical solutions. A person skilled in the art may use different methods to implement the described functions for each specific application with reference to embodiments. However, it should not be considered that the implementation goes beyond the scope of this application.

In this embodiment, the smart door lock may be divided into functional modules based on the foregoing method embodiments. For example, the functional modules may be obtained through division corresponding to various functions, or two or more functions may be integrated into one processing module. The integrated module may be implemented in a form of hardware. It should be noted that division into the modules in this embodiment is an example and is merely logical function division. In actual implementation, there may be another division manner.

When each functional module is obtained through division based on each corresponding function, in an example, the smart door lock may include a behavior identification module, a priority decision module, and a starting control module.

The behavior identification module may be configured to support the smart door lock in performing step 600, and/or another process of the technology described in this specification.

The priority decision module may be configured to support the smart door lock in performing step 610a, step 610b, and the like, and/or another process of the technology described in this specification. The starting control module may be configured to support the smart door lock in performing step 620a, step 620b, and the like, and/or another process of the technology described in this specification.

It should be noted that all related content of the steps in the foregoing method embodiments may be cited in function description of corresponding functional modules. Details are not described herein again.

The smart door lock provided in this embodiment of this application is configured to perform the foregoing application starting method, and therefore can achieve same effects as the foregoing implementation method.

An embodiment of this application further provides an application starting apparatus. The apparatus may be applied to a smart device. The apparatus is configured to perform functions or steps performed by the smart door lock in the foregoing method embodiments.

An embodiment of this application further provides a smart device. The smart device includes the foregoing application starting apparatus. The smart device may be a smart door lock, a smart vehicle lock, or another smart lock that can support a plurality of service functions, or may be a smart doorbell, a smart peephole, or another smart device that can support a plurality of service functions.

An embodiment of this application further provides a chip system. The chip system includes a first processor, a second processor, and at least one interface circuit. The processor and the interface circuit may be interconnected through a line. The interface circuit may read instructions stored in the memory, and send the instructions to the first processor and/or the second processor. When the instructions are executed by the first processor and/or the second processor, the smart device may be enabled to perform functions or steps performed by the smart door lock in the method embodiments. Certainly, the chip system may further include another discrete component. This is not specifically limited in this embodiment of this application.

An embodiment of this application further provides a storage medium. The storage medium includes instructions. When the instructions are run on the foregoing smart device, the smart device is enabled to perform functions or steps performed by the smart door lock in the method embodiments.

An embodiment of this application further provides a program product. When the program product runs on a smart device, the smart device is enabled to perform functions or steps performed by the smart door lock in the method embodiments.

The smart device, the smart door lock, the storage medium, the program product, or the chip provided in embodiments may be configured to perform the corresponding method provided above. Therefore, for beneficial effects that can be achieved, refer to the beneficial effects of the corresponding methods provided above. Details are not described herein again.

The foregoing descriptions about implementations allow a person skilled in the art to clearly understand that, for the purpose of convenient and brief description, division into the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application starting method, applied to a smart device, wherein the smart device comprises a first processor and a second processor, and the method comprises:
when detecting a first user behavior, determining, by the first processor, a first application corresponding to the first user behavior in a plurality of applications of the smart device;
controlling, by the first processor, the second processor to be in a power-on state, and indicating the second processor to preferentially start the first application;
when detecting a second user behavior, determining, by the first processor, a second application corresponding to the second user behavior in the plurality of applications of the smart device, wherein the second user behavior is different from the first user behavior, and the first application is different from the second application; and
controlling, by the first processor, the second processor to be in the power-on state, and indicating the second processor to preferentially start the second application.

2. The method according to claim 1, wherein the determining a first application corresponding to the first user behavior in a plurality of applications of the smart device comprises:
when the first user behavior is that a user initiates a remote connection request by using a device, the first application is an application for performing a remote viewing operation.

3. The method according to claim 1, wherein the smart device is provided with a fingerprint recognition area, and the determining a first application corresponding to the first user behavior in a plurality of applications of the smart device comprises:
when the first user behavior is a touch operation performed by a user on the fingerprint recognition area, the first application is an application for performing a fingerprint recognition operation.

4. The method according to claim 1, wherein the determining a first application corresponding to the first user behavior in a plurality of applications of the smart device comprises:
when the first user behavior is that a user is in a preset range of the smart device, the first application is an application for performing a facial recognition operation.

5. The method according to claim 1, wherein the smart device is provided with a screen, and the determining a first application corresponding to the first user behavior in a plurality of applications of the smart device comprises:
when the first user behavior is a viewing operation performed by a user on the screen, the first application is an application for performing a screen display operation.

6. The method according to claim 1, wherein the determining a first application corresponding to the first user behavior in a plurality of applications of the smart device comprises:
when the first user behavior is a visit behavior of a user, the first application is an application for performing a visit reminding operation.

7. The method according to any one of claims 1 to 6, wherein the method further comprises:
when detecting the first user behavior, determining, by the first processor, a first priority sequence that corresponds to the first user behavior and that is of an application other than the first application in the plurality of applications; and
when detecting the second user behavior, determining, by the first processor, a second priority sequence that corresponds to the second user behavior and that is of an application other than the second application in the plurality of applications;
after the indicating, by the first processor, the second processor to preferentially start the first application, the method further comprises:
indicating, by the first processor, the second processor to sequentially start the application other than the first application in the plurality of applications according to the first priority sequence; and
after the indicating, by the first processor, the second processor to preferentially start the second application, the method further comprises:
indicating, by the first processor, the second processor to sequentially start the application other than the second application in the plurality of applications according to the second priority sequence.

8. The method according to claim 7, wherein a data transmission channel between the first processor and the second processor comprises a first channel and a second channel;
when the first processor detects the first user behavior, the first processor indicates, through the first channel, the second processor to preferentially start the first application; and the first processor indicates, through the second channel, the second processor to sequentially start the application other than the first application in the plurality of applications according to the first priority sequence; and
when the first processor detects the second user behavior, the first processor indicates, through the first channel, the second processor to preferentially start the second application; and the first processor indicates, through the second channel, the second processor to sequentially start the application other than the second application in the plurality of applications according to the second priority sequence.

9. The method according to claim 8, wherein the first channel comprises a general-purpose input/output interface GPIO interface, and the second channel comprises a serial peripheral interface SPI interface.

10. The method according to any one of claims 1 to 6, wherein after the indicating, by the first processor, the second processor to preferentially start the first application, the method further comprises:
sequentially starting, by the second processor, an application other than the first application in the plurality of applications according to a preset priority sequence of the plurality of applications; and
after the indicating, by the first processor, the second processor to preferentially start the second application, the method further comprises:
sequentially starting, by the second processor, an application other than the second application in the plurality of applications according to the preset priority sequence of the plurality of applications.

11. The method according to any one of claims 1 to 10, wherein the method further comprises:
when simultaneously detecting the first user behavior and the second user behavior, determining, by the first processor, a third priority sequence of the first application and the second application; and
controlling, by the first processor, the second processor to be in the power-on state, and indicating the second processor to sequentially start the first application and the second application according to the third priority sequence.

12. A smart device, wherein the smart device comprises a memory, a first processor, and a second processor, the memory is coupled to the first processor and the second processor, the memory is configured to store program code, the program code comprises instructions, and when the first processor and the second processor execute the instructions, the smart device performs the method according to any one of claims 1 to 11.

13. A chip system, wherein the chip system is applied to a smart device, and the chip system comprises one or more interface circuits, a first processor, and a second processor; the interface circuit is interconnected with the first processor and the second processor through a line; the interface circuit is configured to: receive a signal from a memory of the smart device, and send the signal to the first processor and the second processor, wherein the signal comprises instructions stored in the memory; and when the first processor and the second processor execute the instructions, the smart device performs the method according to any one of claims 1 to 11.

14. A readable storage medium, comprising instructions, wherein when the instructions are run on a smart device, the smart device is enabled to perform the method according to any one of claims 1 to 11.

15. A program product, wherein when the program product runs on a smart device, the smart device is enabled to perform the method according to any one of claims 1 to 11.
